# EUROPEAN PATENT SPECIFICATION

(11) **EP 1 098 123 B1**
(45) Date of publication and mention of the grant of the patent: **23.03.2005**
(21) Application number: 00118929.9
(22) Date of filing: 01.09.2000
(51) Int. Cl.: F16K 31/122, F16K 35/06, E05F 15/02

(54) **Hydraulic actuator**
Hydraulikzylinder
Vérin hydraulique

(30) Priority: 08.11.1999 IT VR990092
(43) Date of publication of application: 09.05.2001
(73) Proprietor: Meccanica Fadini s.n.c. di Fadini Luigi, Gaetano e Carlo, 37053 Cerea (IT)
(72) Inventor: Fadini, Luigi, 37053 Cerea (IT)
(74) Representative: Savi, Alberto

(56) References cited:
- EP-A- 0 237 740
- EP-A- 0 520 166
- DE-A- 2 901 797
- DE-A- 3 639 177
- GB-A- 1 326 039

## Description

The present invention refers to a hydraulic actuator to be used in particular to open gates such as automatic gate types.

The proposed actuator is used to open and/or close automatic gates. The employment of this actuator permits thus to automate the phases of movement of the gate on which the actuator is mounted.

The actuator according to the present invention shows some improvements in comparison with the known solutions. These improvements increase the operating capacity of hydraulic actuators for the opening and closing of automatic gates. In particular, the problems related to the releasing of the piston rods are solved in case of a mechanical breakdown or electric blackout.

In the field of gate automatisms it is known to employ hydraulic or oil pressure systems which make the opening and closing motions of the gate wings automatic, the entry and exit of vehicles, persons, etc. being thus facilitated.

According to these solutions, the wings of gates, main doors or the like are moved through the employment of pistons which are mounted on a fixed part of the supporting structure on one side and near the wings on the other side. It is thus possible to open and close the wings as occasion may require.

The hydraulic piston is in-line and linked-up to a hydraulic power plant controlled by an electronic device. The electronic device controls the sense of rotation of the hydraulic pump which is suitable to impart motion to the piston rod according to the required phases.

The operating device for pistons to be placed on two-wing gates comprises an electric motor which moves the hydraulic pump in such a way as to push the fluid flow in both opposite directions. In this way, the piston rod is moved according to an opening or closing motion depending on the starting position.

One of the problems tackled in several ways by the technicians of the present field is connected with the possibility of releasing the opening device in case of interruptions of the electric current feeding the plant.

In fact, if suitable releasing devices should not be provided in such cases, it would be impossible to open the automatic gate and there would be the known consequences.

The known releasing means usually provide the releasing of the piston rod end from the respective coupling point on the gate.

However, this system, which is used by most builders, has the disadvantage of a limited use practicalness since it is necessary to accomplish a series of manual operations to release the pistons, which operations are rather uncomfortable and involve the removal of the protecting casing after the opening of the lock and the subsequent withdrawal of the coupled unit.

Another drawback of the known solutions refers to a certain structural complexity of the various components owing to the presence of a hydraulic pump and a joint. In the present invention, such elements have been replaced with an only rotary unit.

The aim of this invention is to provide and carry out an improved hydraulic actuator, in particular of the gate opening piston type. This kind of actuator betters the general employment conditions and the capacity of handling the hydraulic pistons to open and close automatic gates, and in particular to solve the practical difficulties connected with the unlocking of the piston rods in case of a mechanical breakdown or electric blackout.

A further aim of the present invention is to simplify the structural components of the hydraulic plant by utilizing a simplified valve system.

Another aim of this invention is to provide an improved hydraulic actuator comprising an effective system against the house-breaking. This system makes the actuator safer since it becomes more difficult to break open in comparison with the known systems.

Another aim of the invention is to provide an actuator for the opening of gates or the like, which actuator is completely deprived of the conventional pump-joint units of the known systems. In fact, such units have been replaced with a particular rotary unit actuated by a motor.

The aforesaid aims and advantages are reached according to the present invention with a hydraulic actuator as defined in claim 1.

Preferred embodiments of the invention are set out in the dependent claims.

Further particular advantages and functions of an actuator according to the present invention will be better understood from the following description given as an example that does not limit the invention itself as well as from the accompanying drawings wherein:

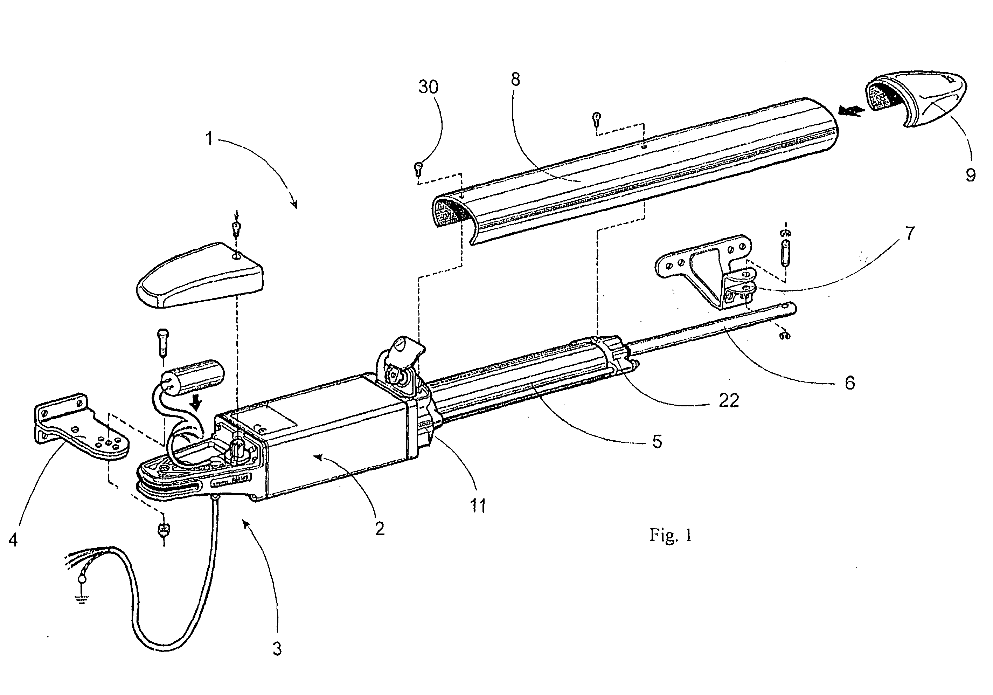

Fig. 1 shows a schematical perspective view of an actuator according to the invention from which all the components of the hydraulic actuator appear;
Fig. 2 shows a schematical detailed whole view in vertical section of the hydraulic actuator according to the invention on the whole.

With reference to the accompanying figures, number 1 denotes in general an actuator such as of the hydraulic piston type or of the oil pressure piston type for the opening of gates or the like according to the invention, which actuator consists basically of an outer containing box 2 showing a parallelepid shape.A unit 3 or bottom plate is provided on one side of the box so as to be coupled with a perforated connecting plate 4 to be mounted on a fixed points while a casing 5 is provided on the other side of the box, in which a piston rod 6 slides as described below.

The piston rod 6 in its turn is provided with a free end which engages a mounting stirrup 7 which is fixed to the wing of the gate or main door to be moved automatically.

A protecting casing 8 is mounted on the top of the unit piston rod 6 - casing 5. The end of the casing 8 is closed with a cap 9. The protecting casing 8 is to protect the piston rod 6.

An electric motor 10 is included within the box 2 and is connected with a hydraulic circuit ending in a valve body indicated with the number 11 on the whole. The valve body represents the main operative part of the actuator.

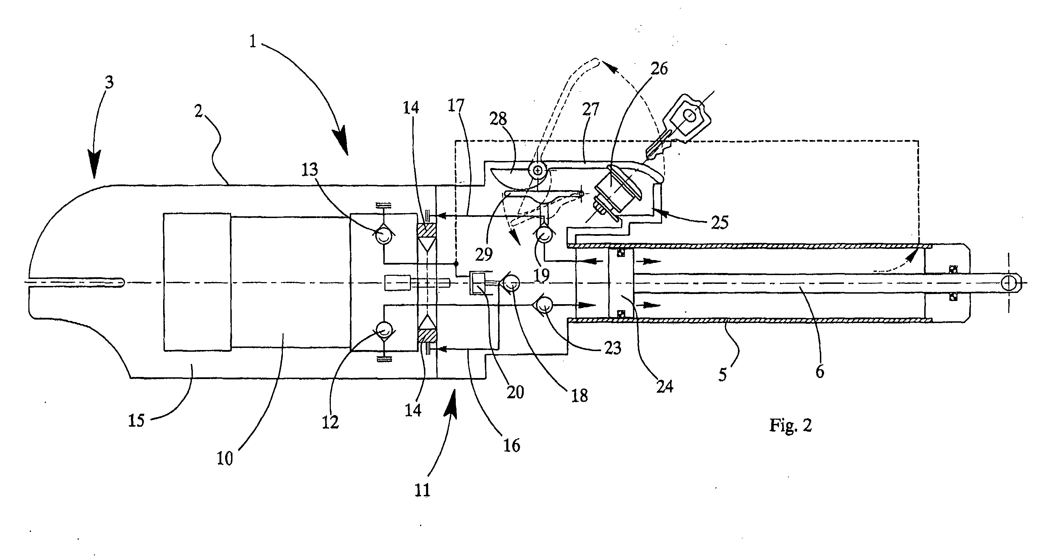

With reference to Figure 2, the hydraulic circuit comprises a right suction ball 12, a left suction ball 13 and a hydraulic lobe pump 14.

The electric motor 10 and the valve body 11 are included in an oil sump 15 which is obtained within the containing box 2.

In addition, the hydraulic circuit includes discharge pipes 16 and 17 which lead to tight balls 18 and a release ball 19 while the suction ball 12 acts on that non return ball 23.

In the middle of the valve body 11 there is a small cylinder 20 to open the oil ball. The small cylinder 20 acts on a pipe 21 which gets into the head 22 of the piston.

Furthermore, there is a nonreturn ball 23 which is placed near the piston 24 which slides in the casing 5.

In the upper part of the valve body 11 there is a safety device denoted with the number 25 on the whole. The safety device 25 controls the release ball 19.

This safety device includes a lock 26 which is operated with a suitable key. This lock 26 permits a cover 27 provided with a cam 28 to be locked or released.

The cam 28 in its turn is put in contact with an operating lever 29 which acts just on the release ball 19 which permits to free the run of the piston rod 6 in case it is necessary, for instance owing to a blackout of electric current or to other breakdowns in the gate opening system or in case a manual opening is necessary. As it can be seen, the so-described actuator is completely deprived of the conventional pump-joint units, which are present in the known systems since such units are replaced with the rotary unit which includes the hydraulic lobe pump 14 operated by the motor 10.

in order to control the release of the piston, it is thus sufficient to open and lift the cover 27 after having released the key lock so that the lowering of the cam 28 and lever 29 frees the release ball 19.

Now, the unit piston 24 - piston rod 6 can slide in the casing 5 since the hydraulic circuit is completely free now.

In addition, it is provided for that the protecting casing 8 and the cap 9 thereof, both being a protection for the piston rod 6, are fixed by means of a safety screw 30 the head of which is arranged within the small cover 27.

In this way, it is not possible to gain access to the screw 30 and to remove the casing 8 unless the small cover 27 is open by means of a suitable key.

A technician of this field can make some amendments and variants in the invention, which has been described and represented as a non-exclusive example. In this way, the technician can obtain solutions that are to be considered equivalent to the described parts and components and are to be included in the scope of protection of the invention, which is only limited by the appended claims.

## Claims

1. Hydraulic actuator, in particular of the gate opening piston type, comprising an electric motor (10), a valve body (11) provided with a pump (14) and a hydraulic circuit which said electric motor (10) is connected with, and a lever device (29) suited to control a releasing valve (19) arranged in the hydraulic circuit, whereby said lever device (29) is connected to a cover (27) obtained in a protecting structure of the hydraulic actuator, said protecting structure comprising said cover (27), a cam (28) and a lock (26).

2. Hydraulic actuator as claimed in claim 1, **characterized by** the fact that it comprises basically an outer containing box (2) showing a parallelepiped shape, a unit (3) or bottom plate being provided on one side of the box so as to be coupled on to a perforated connecting plate (4) to be mounted on a fixed point while a casing (5) being provided on the other side of the box, in which casing a piston rod (6) slides.

3. Hydraulic **actuator** as claimed in the foregoing claims, **characterized by** the fact that the electric motor (10) is included within the said box (2).

4. Hydraulic actuator as claimed in the foregoing claims, **characterized by** the fact that the hydraulic circuit consists of a series of suction balls (12 and 13) and tight balls (18) and at least one hydraulic lobe pump element (14).

5. Hydraulic actuator as claimed in the foregoing claims, **characterized by** the fact that in the upper part of the valve body (11) there is a safety device (25).

6. Hydraulic actuator as claimed in the foregoing claims **characterized by** the fact that the said safety device includes the lock (26) which is operated with a suitable key, permitting the cover (27) provided with the cam (28) to be locked or released, the cam in its turn being put into contact with the lever device (29) acting on the releasing valve (19) permitting to free the run of a piston rod (6) if it is necessary as in the case of a manual opening of a gate shutter.

## Patentansprüche

1. Hydraulischer Antrieb, speziell in der Art eines Torantriebs oder Ähnlichem, mit Elektromotor (10), Ventilkorpus (11) mit Pumpe (14) und Hydraulikkreislauf, mit dem der Elektromotor (10) verbunden ist, Hebelvorrichtung (29) zur Steuerung eines Freigabeventils (19) im Hydraulikkreislauf, in dem die Hebelvorrichtung (29) mit einem Deckel (27) verbunden ist, der sich in einem Schutzgehäuse des hydraulischen Antriebs befindet (das Schutzgehäuse beinhaltet den Deckel), einem Nocken (28) und einem Schloss (26).

2. Hydraulischer Antrieb gemäß vorstehendem Anspruch, **dadurch gekennzeichnet, dass** er im Wesentlichen aus einem Außengehäuse (2) in Form eines Parallelepipedons besteht, das auf einer Seite über einen Block oder Boden (3) für den Ansatz an einer gelochten Ansatzplatte (4) verfügt, die an einem festen Punkt angebracht werden kann, auf der anderen Seite über eine Laufbuchse (5), in der der Kolbenschaft läuft.

3. Hydraulischer Antrieb gemäß vorstehenden Ansprüchen, **dadurch gekennzeichnet, dass** sich der Elektromotor (10) im Gehäuse (2) befindet.

4. Hydraulischer Antrieb gemäß vorstehenden Ansprüchen, **dadurch gekennzeichnet, dass** der hydraulische Kreislauf eine Reihe von Saugkugeln (12 und 13) und Dichtungskugeln (18) sowie mindestens eine Hydrokapselpumpe oder Ähnliches (14) enthält.

5. Hydraulischer Antrieb gemäß vorstehenden Ansprüchen, **dadurch gekennzeichnet, dass** an der Oberseite des Ventilkorpus (11) eine Sicherheitsvorrichtung (25) vorhanden ist.

6. Hydraulischer Antrieb gemäß vorstehenden Ansprüchen, **dadurch gekennzeichnet, dass** die Sicherheitsvorrichtung das Schloss (26) enthält, das mit dem dazugehörigen Schlüssel auf- und zugeschlossen wird. Der Schlüssel sperrt oder löst den Deckel (27) mit Nocken (28), der wiederum die Hebelvorrichtung (29) berührt, die auf das Freigabeventil (19) einwirkt, das bei Bedarf den Hub eines Schafts (6) freigibt, wie beispielsweise für den Fall, dass ein Torflügel von Hand geöffnet werden muss.

## Revendications

1. Actionneur hydraulique particulièrement du type ouvre-grille ou semblables, comprenant un moteur électrique (10), un corps de soupape (11) équipé d'une pompe (14) et d'un circuit hydraulique sur lequel est branché ce moteur électrique (10) et d'un dispositif à levier (29) apte à commander une soupape de déblocage (19) placée sur le circuit hydraulique, où ce dispositif à levier (29) est relié à un couvercle (27) ménagé dans une structure protectrice de l'actionneur hydraulique et cette structure protectrice comprend ce couvercle, une came (28) et une serrure (26).

2. Actionneur hydraulique suivant la revendication précédente, **caractérisé par le fait qu'**il est substantiellement constitué d'un boîtier de retenue extérieur (2), en forme de parallélépipède qui, d'un côté, présente un groupe ou culot (3) pour l'accrochage à une plaque de fixation (4) percée adaptable à un endroit fixe, tandis que, de l'autre côté, 11 y a une chemise (5) où glisse la tige du piston.

3. Actionneur hydraulique suivant les revendications précédentes, **caractérisé par le fait que** ce boîtier (2) contient le moteur électrique (10).

4. Actionneur hydraulique suivant les revendications précédentes, **caractérisé par le fait que** le circuit hydraulique comprend un jeu de billes d'aspiration (12 et 13) et d'étanchéité (18) et une pompe hydraulique à lobes au moins ou un élément semblable (14).

5. Actionneur hydraulique suivant les revendications précédentes, **caractérisé par le fait qu'**en haut du corps de soupape (11) il y a un dispositif de sécurité (25).

6. Actionneur hydraulique suivant les revendications précédentes, **caractérisé par le fait que** ce dispositif de sécurité comprend la serrure (26) pouvant être actionnée par une clé spéciale qui permet de bloquer ou de dégager un couvercle (27) muni d'une came (28) qui, à son tour, est mise en contact avec le dispositif à levier (29) agissant sur la soupape de déblocage (19) qui permet de dégager la course d'une tige (6), s'il le faut, comme s'il fallait ouvrir manuellement un vantail de la grille.
